# EUROPÄISCHE PATENTSCHRIFT

(11) **EP 3 765 384 B1**
(45) Veröffentlichungstag und Bekanntmachung des Hinweises auf die Patenterteilung: **22.01.2025**
(21) Anmeldenummer: 19706386.0
(22) Anmeldetag: 30.01.2019
(51) Int. Cl.: B29C 65/16, B29C 65/00, B29L 31/00, B65D 83/38, B65D 83/48, B23K 20/10, B23K 20/12, B29C 65/06, B29C 65/08

(54) **VENTILANORDNUNG UND ABGABGEVORRICHTUNG**
VALVE ARRANGEMENT AND DISCHARGE DEVICE
SYSTÈME DE SOUPAPES ET DISPOSITIF D'ÉVACUATION

(30) Priorität: 16.03.2018 DE 102018002130; 04.05.2018 DE 102018003741
(43) Veröffentlichungstag der Anmeldung: 20.01.2021
(60) Teilanmeldung: 24220062.4
(73) Patentinhaber: Aptar Dortmund GmbH, 44319 Dortmund (DE)
(72) Erfinder: JASPER, Bernhard, 45731 Waltrop (DE); SCHMITZ, Detlef, 59348 Lüdinghausen (DE); KUROSKY, Lukas, 44319 Dortmund (DE)
(74) Vertreter: Häckel, Stefan
(86) Internationale Anmeldenummer: PCT/EP2019/052281
(87) Internationale Veröffentlichungsnummer: WO 2019/174809

(56) Entgegenhaltungen:
- EP-A1- 2 832 661
- EP-A1- 2 894 114
- WO-A1-03/062092
- US-A- 5 573 043
- US-A1- 2012 292 338

## Beschreibung

Die vorliegende Erfindung betrifft eine Ventilanordnung zur Abgabe eines Fluids nach dem Oberbegriff des Anspruchs 1, eine Abgabevorrichtung zur Abgabe eines Fluids nach dem Oberbegriff des Anspruchs 8 sowie ein Verfahren zur Herstellung einer Ventilanordnung nach dem Oberbegriff des Anspruchs 11.

Insbesondere betrifft die vorliegende Erfindung das Gebiet der Aerosolbehälter, also Behälter, in denen ein unter Druck stehendes Fluid aufgenommen ist, das als Aerosol abgegeben bzw. versprüht werden kann. Derartige Behälter können insbesondere für Hygiene-, Pflege- und Kosmetikprodukte eingesetzt werden, beispielsweise Deodorants oder Haarsprays.

Grundsätzlich ist die vorliegende Erfindung jedoch vielseitig einsetzbar und kann auf beliebigen technischen Gebieten eingesetzt werden, in denen eine (dosierte) Abgabe eines Fluids aus einem Behälter erfolgt.

Die WO 89/08062 A2 offenbart einen Aerosolbehälter, dessen Öffnung durch einen Ventilteller mit einem Abgabeventil verschlossen ist. Der Aerosolbehälter besteht aus Kunststoff. Der Ventilteller und ein Gehäuse des Abgabeventils sind einteilig aus Kunststoff geformt. Eine Kunststoffkappe ist auf dem Ventilgehäuse befestigt und mit dem äußeren Öffnungsrand des Ventilgehäuses verschweißt.

Die EP 2 894 114 A1 offenbart eine Ventilbaugruppe für Aerosolbehälter mit einem Ventilteller, einem Ventilelement und einem Ventilgehäuse für das Ventilelement. An der Oberseite des Ventiltellers ist ein Deckel angeordnet, der eine Montageöffnung des Ventilgehäuses verschließt und an dem Ventilteller befestigt ist, beispielsweise durch eine Schweißverbindung. Der Ventilteller und der Deckel bestehen aus Kunststoff.

Die EP 2 832 661 A1 offenbart einen Aerosolbehälter, dessen Behälteröffnung durch einen Ventilteller mit einem Abgabeventil verschlossen ist, wobei der Ventilteller aus Kunststoff besteht. An der Innenseite des Ventiltellers ist ein formstabiler Fortsatz angeformt, der einen Aufnahmeraum für ein Ventilgehäuse des Abgabeventils bildet. Der Fortsatz und das Ventilgehäuse sind durch mindestens ein separates Sicherungselement verbunden.

Die WO 2016/202754 A1 betrifft eine Ventilanordnung für einen Aerosolbehälter. Ein Ventilteller und ein Ventilgehäuse der Ventilanordnung sind durch ein einstückiges Bauteil gebildet, in das eine Feder, eine Dichtung und ein Ventilelement von der dem Behälter abgewandten Außenseite eingesetzt werden und durch einen im Wesentlichen scheibenartigen Haltering an dem Ventilteller fixiert werden. Der Haltering wird mit dem Ventilteller axial ultraschallverschweißt.

Die WO 2017/021038 A1 betrifft eine Ventilanordnung und einen Behälter zur Abgabe eines Fluids. Ein Ventilteller der Ventilanordnung besteht aus semikristallinem Polyester. Er kann generell durch Reibschweißen, Ultraschallschweißen oder Laserschweißen mit einem Behälter verbunden werden, wobei ein Kragen des Ventiltellers einen Rand des Behälters umgreift.

Die WO 03/062092 A1 betrifft ein Ventil zum Ausbringen von Schaumbildnern aus Druckbehältern. Das Ventil ist an einem Ventilteller gelagert. Mittels einer Blattfeder wird ein Dichtelement gegen eine Dichtscheibe am Ventilteller gepresst, um das Ventil abzudichten.

Die US 5,573,043 A betrifft einen Ventilteller für einen unter Druck stehenden Spender, wobei eine dichtende Verbindung zwischen Ventilteller und einem Druckbehälter durch Verschweißen, insbesondere Reib- oder Ultraschallverschweißen, hergestellt wird. Eine Ventilanordnung wird über ein Paar ineinandergreifender Hülsen am Ventilteller befestigt.

Die US 2012/292338 A1 betrifft Aerosol-Spender und deren Herstellung. Der Spender weist einen Druckbehälter mit einem Ventilteller auf, wobei der Ventilteller eine Öffnung zum Aufnehmen einer Ventilanordnung und einen Flüssigkeitsbeutel oder eine Flüssigkeitsleitung aufweist.

Es ist eine Aufgabe der vorliegenden Erfindung, eine flexible Verwendung eines herkömmlichen Ventils und/oder eine einfache und kostengünstige Produktion einer Ventilanordnung bzw. Abgabevorrichtung zu ermöglichen.

Die obige Aufgabe wird gelöst durch eine Ventilanordnung gemäß Anspruch 1, eine Abgabevorrichtung gemäß Anspruch 8, oder ein Verfahren gemäß Anspruch 11. Vorteilhafte Weiterbildungen sind Gegenstand der Unteransprüche.

Insbesondere wird durch die vorliegende Erfindung eine besonders einfache Möglichkeit angegeben, mit der ein an sich bekanntes bzw. herkömmliches Ventil wahlweise mit verschiedenen Ventiltellern, die wahlweise aus Kunststoff oder Metall bestehen können, eingesetzt bzw. verwendet werden kann, ohne dass dazu das Ventil an sich angepasst werden muss. Dies ermöglicht eine einfache und kostengünstige Produktion bzw. Montage. Des Weiteren wird die Flexibilität bei der Herstellung einer Ventilanordnung bzw. Abgabevorrichtung erhöht, da unterschiedliche Teile, insbesondere Ventilteller, mit dem gleichen Standardventil verwendet werden können.

Eine vorschlagsgemäße Ventilanordnung ist zur Abgabe eines Fluids, insbesondere aus einem Behälter, ausgebildet. Die Ventilanordnung weist einen Ventilteller zur Befestigung der Ventilanordnung an einem zugeordneten Behälter auf. Ferner weist die Ventilanordnung ein Ventilgehäuse und ein Befestigungsteil zur Befestigung des Ventilgehäuses an dem Ventilteller auf. Vorzugsweise ist das Befestigungsteil ein von dem Ventilgehäuse separates Bauteil. Hierdurch ist eine Verwendung eines Standardventils mit unterschiedlichen Ventiltellern ermöglicht.

Vorzugsweise bestehen der Ventilteller, das Befestigungsteil, das Ventilgehäuse, ein Ventilelement der Ventilanordnung und/oder eine Feder der Ventilanordnung und/oder die Ventilanordnung insgesamt aus Kunststoff, insbesondere PET. Dies ermöglicht eine kostengünstige Produktion.

Es ist bevorzugt, dass das Ventilgehäuse mit dem Ventilelement, der Dichtung und optional mit dem Rückstellelement formschlüssig zu einem Ventil verbindbar ist. Insbesondere sind das Ventilgehäuse, das Ventilelement, die Dichtung und optional das Rückstellelement derart miteinander verbindbar bzw. zusammenfügbar, dass sie bei normalem Gebrauch bzw. ohne äußere Einwirkung verbunden bleiben bzw. nicht auseinander fallen, so dass das Ventil als Ganzes bzw. als vormontiertes Bauteil in den Ventilteller einsetzbar und mit diesem verbindbar ist. Insbesondere wird hierdurch die Montage erleichtert.

Bei der vorschlagsgemäßen Ventilanordnung ist das Befestigungsteil mit dem Ventilteller laserverschweißt oder ultraschallverschweißt.

Das Befestigungsteil weist einen ersten zylindrischen oder konischen Abschnitt und einen zweiten radial davon abragenden Abschnitt auf. Hierdurch kann eine für einen Laserstrahl leicht zugängliche Kontaktfläche zwischen dem Ventilteller und dem Befestigungsteil gebildet werden.

Der erste Abschnitt ist in einen Aufnahmeraum des Ventiltellers eingeführt und der zweite Abschnitt liegt an einer Unterseite des Ventiltellers an.

Das Ventilgehäuse ist ohne Spiel zwischen dem Ventilteller und dem Befestigungsteil eingeklemmt.

Das Befestigungsteil weist vorzugsweise einen Verschweißbereich auf. Der Verschweißbereich ist insbesondere an dem zweiten Abschnitt angeordnet. Vorzugsweise weist der Verschweißbereich einen dreieckigen oder rechteckigen Querschnitt auf.

Es ist besonders bevorzugt, dass der Ventilteller aus einem laserabsorbierenden und/oder dunklen, insbesondere schwarzen, Material hergestellt ist und das Befestigungsteil aus einem transparenten, insbesondere lasertransparenten, Material hergestellt ist. Hierdurch wird ein Laserverschweißen und/oder ein Ultraschallschweißen des Befestigungsteils mit dem Ventilteller auf einfache Weise ermöglicht.

Gemäß einem weiteren Aspekt betrifft die vorliegende Erfindung eine Abgabevorrichtung zur Abgabe eines Fluids. Die Abgabevorrichtung weist einen Behälter und eine vorschlagsgemäße Ventilanordnung mit einem an dem Behälter befestigten Ventilteller auf.

Vorzugsweise ist der Ventilteller mit dem Behälter reibverschweißt und/oder radial verschweißt.

Vorzugsweise schließt der Ventilteller axial bündig mit dem Behälter ab.

Bevorzugt besteht die Ventilanordnung, insbesondere der Ventilteller, und/oder der Behälter aus Kunststoff, insbesondere PET. Dies ermöglicht eine kostengünstige Produktion.

Der Ventilteller weist vorzugsweise eine Kopplungseinrichtung auf, die zur drehfesten Kopplung des Ventiltellers mit einem Werkzeug bzw. Halter zum Reibverschweißen des Ventiltellers mit dem Behälter ausgebildet ist. Die Kopplungseinrichtung ist vorzugsweise durch, insbesondere auf der Oberseite des Ventiltellers angeordnete, vorzugsweise sich radial erstreckende Kopplungselemente gebildet oder weist diese auf. Die Kopplungselemente sind besonders bevorzugt in einer insbesondere ringartigen Vertiefung des Ventiltellers angeordnet. Dies ermöglicht auf einfache Weise eine zuverlässige Kopplung.

Der Behälter weist vorzugsweise einen Kopplungsabschnitt auf, der zur drehfesten Kopplung mit einem Werkzeug bzw. Halter zum bzw. beim Reibverschweißen des Ventiltellers mit dem Behälter ausgebildet ist. Der Kopplungsabschnitt ist insbesondere in oder an einem Halsbereich des Behälters angeordnet.

Vorzugsweise weist der Kopplungsabschnitt ein oder mehrere radial von dem Behälter abragende Kopplungselemente auf oder ist dadurch gebildet. Dies ermöglicht auf einfache Weise eine zuverlässige Kopplung.

Gemäß einem weiteren, auch unabhängig realisierbaren Aspekt betrifft die vorliegende Erfindung ein Verfahren zur Herstellung einer Ventilanordnung, wobei das Befestigungsteil mit dem Ventilteller laserverschweißt oder ultraschallverschweißt wird.

Das Ventil wird erst in eine zugeordnete Aufnahme des Ventiltellers eingeführt und anschließend wird das Befestigungsteil in die Aufnahme eingeführt bzw. eingesetzt, so dass das Ventil zwischen dem Ventilteller und dem Befestigungsteil angeordnet, insbesondere eingeklemmt, ist und das Befestigungsteil an dem Ventilteller anliegt. Vorzugsweise wird der Ventilteller dann durch das Befestigungsteil hindurch von einem Laserstrahl bestrahlt, so dass der Ventilteller und das Befestigungsteil miteinander verschweißt werden.

Bei einem bevorzugten, nicht beanspruchten Verfahren zur Herstellung einer Abgabevorrichtung wird der Ventilteller mit dem Behälter reibverschweißt, so dass der Ventilteller mit dem Behälter radial verschweißt wird und/oder axial bündig abschließt.

Weitere Aspekte, Merkmale, Vorteile und Eigenschaften der vorliegenden Erfindung ergeben sich aus den Ansprüchen und der nachfolgenden Beschreibung bevorzugter Ausführungsformen anhand der Zeichnung. Hierbei fallen die erste und zweite Ausführungsform nicht unter den Wortlaut der Ansprüche, werden aber als das Verständnis der Erfindung erleichternd angesehen. Alle Merkmale der ersten und zweiten Ausführungsform können auch bei Ausführungsformen, die unter den Wortlaut der Ansprüche fallen, realisiert sein, sofern sie nicht im Widerspruch dazu stehen. Es zeigt:
- Fig. 1: eine Explosionsdarstellung einer Abgabevorrichtung gemäß einer ersten nicht erfindungsgemäßen Ausführungsform;
- Fig. 2: einen Schnitt der Abgabevorrichtung von Fig. 1 im montierten Zustand;
- Fig. 3: eine perspektivische Darstellung eines Befestigungsteils gemäß der ersten Ausführungsform;
- Fig. 4: eine perspektivische Darstellung eines Ventiltellers gemäß der ersten Ausführungsform;
- Fig. 5: eine Explosionsdarstellung einer Abgabevorrichtung gemäß einer zweiten nicht erfindungsgemäßen Ausführungsform;
- Fig. 6: einen Schnitt der Abgabevorrichtung von Fig. 5 im montierten Zustand;
- Fig. 7: eine perspektivische Darstellung eines Befestigungsteils gemäß der zweiten Ausführungsform;
- Fig. 8: eine perspektivische Darstellung eines Ventiltellers gemäß der zweiten Ausführungsform;
- Fig.9A: eine perspektivische Darstellung eines Befestigungsteils gemäß einer dritten erfindungsgemäßen Ausführungsform;
- Fig. 9B: eine perspektivische Darstellung eines Befestigungsteils gemäß einer vierten erfindungsgemäßen Ausführungsform;
- Fig. 10: einen Schnitt der Abgabevorrichtung gemäß der dritten bzw. vierten Ausführungsform;
- Fig. 11: einen Schnitt eines Behälters der Abgabevorrichtung im Bereich eines Kopplungselements; und
- Fig. 12: einen Schnitt der Abgabevorrichtung gemäß Fig. 10 mit zusätzlich angedeuteten Werkzeugen.

In den Figuren werden für gleiche oder gleichartige Komponenten und Einrichtungen die gleichen Bezugszeichen verwendet, wobei sich die gleichen oder entsprechende Vorteile und Eigenschaften ergeben können, auch wenn eine wiederholte Beschreibung weggelassen ist.

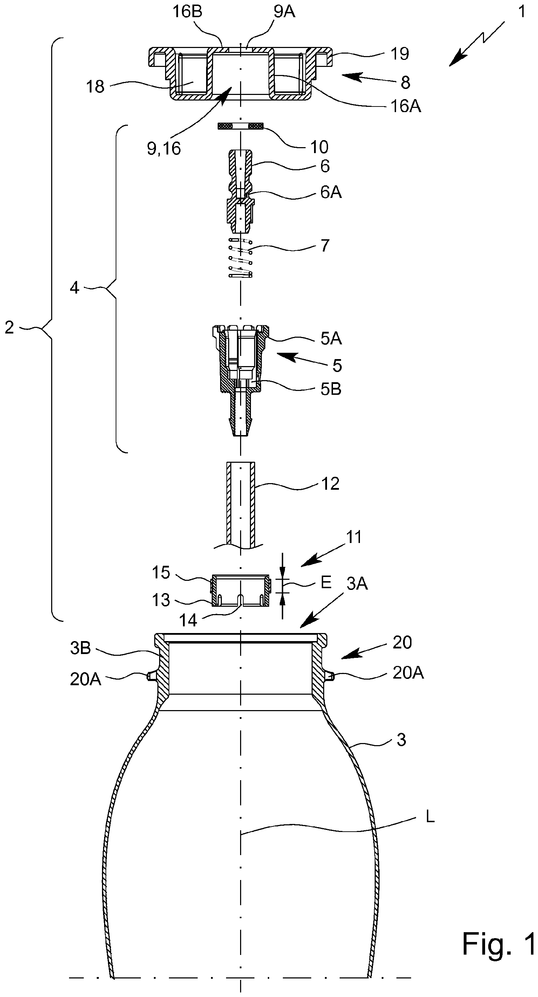

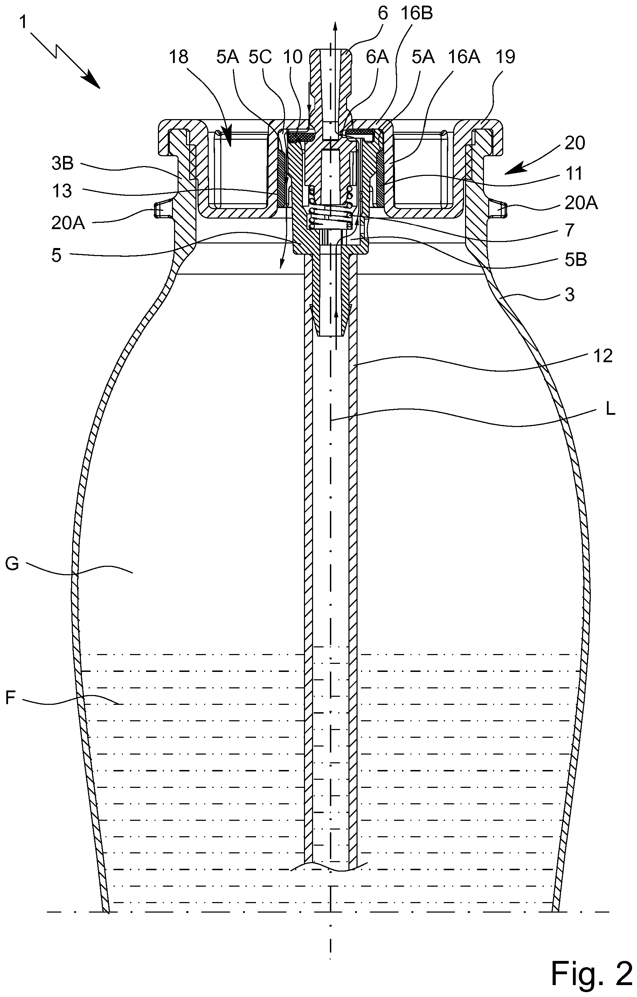

Fig. 1 und 2 zeigen eine Abgabevorrichtung 1 gemäß einer ersten Ausführungsform. Fig. 2 zeigt die Abgabevorrichtung 1 gemäß der ersten Ausführungsform in einem fertig montierten Zustand.

Die Abgabevorrichtung 1 weist eine Ventilanordnung 2 und einen Behälter 3 auf. Die Ventilanordnung 2 ist vorzugsweise zumindest teilweise in einer Öffnung 3A des Behälters 3 anordenbar bzw. angeordnet. Insbesondere wird bei der (fertig montierten) Abgabevorrichtung 1 der Behälter 3 bzw. dessen Öffnung 3A durch die Ventilanordnung 2 verschlossen oder abgedichtet.

Die Ventilanordnung 2 weist ein Ventil 4 und einen Ventilteller 8 auf.

Das Ventil 4 weist ein Ventilgehäuse 5, ein bewegbares Ventilelement 6 und vorzugsweise ein Rückstellelement 7 auf. Beim Darstellungsbeispiel ist vorzugsweise das Rückstellelement 7 als Druckfeder und/oder als Schraubenfeder ausgebildet.

Abweichend vom Darstellungsbeispiel kann das Rückstellelement 7 jedoch auch eine beliebige andere geometrische Form aufweisen, durch die eine (elastische) Rückstellkraft bzw. Federkraft realisierbar bzw. realisiert ist. Das Rückstellelement 7 kann aus Kunststoff oder Metall bestehen.

Das Ventilelement 6 ist vorzugsweise innerhalb des Ventilgehäuses 5 bzw. axial zu dem Ventilgehäuse 5 bewegbar. Vorzugsweise ist das Ventilelement 6 mittels des Rückstellelements 7 in eine Position vorgespannt, in der das Ventilelement 6 das Ventil 4 schließt bzw. in der das Ventil 4 geschlossen ist.

Unter einer "axialen" Richtung bzw. Bewegung wird bei der vorliegenden Erfindung eine Richtung bzw. Bewegung verstanden, die entlang oder parallel zu einer Hauptabgaberichtung oder Zentral- bzw. Längsachse L der Abgabevorrichtung 1 verläuft. In analoger Weise bezieht sich die Bezeichnung "radial" vorzugsweise ebenfalls auf die Achse L.

Der Schnitt durch Ventilgehäuse 5 verläuft in den Figuren links der Achse L in einer anderen Ebene als rechts der Achse L, nämlich zwischen zwei der in Figuren erkennbaren, außen an dem Ventilgehäuse angeordneten Rippen anstatt durch eine der Rippen. Dadurch ist insbesondere in Fig. 2 der Weg des Fluids beim später noch erläuterten Befüllen der Abgabevorrichtung 1 besser erkennbar.

Der Ventilteller 8 ist vorzugsweise zur Aufnahme bzw. Halterung des Ventils 4 und/oder zur Befestigung des Ventils 4 an dem Behälter 3 ausgebildet bzw. vorgesehen.

Der Ventilteller 8 weist vorzugsweise eine Aufnahme 9 zur Aufnahme des Ventils 4 auf. Die Aufnahme 9 weist vorzugsweise eine mittig bzw. zentral angeordnete Öffnung oder Durchbrechung 9A auf.

Vorzugsweise wird bzw. ist der Behälter 3 bzw. dessen Öffnung 3A mittels des Ventiltellers 8 fluidisch und/oder gasdicht verschlossen und/oder abgedichtet.

Ferner weist die Ventilanordnung 2 bzw. das Ventil 4 vorzugsweise eine Dichtung 10 zur Abdichtung des Ventils 4 gegen den Ventilteller 8 auf. Die Dichtung 10 ist vorzugsweise ringartig und/oder scheibenartig ausgebildet.

Die Dichtung 10 ist vorzugsweise verformbar und/oder besteht vorzugsweise aus einem flexiblen und/oder elastisch verformbaren Material.

Vorzugsweise sind das Ventilgehäuse 5, das Ventilelement 6, die Dichtung 10 und optional das Rückstellelement 7 miteinander verbindbar bzw. zusammenfügbar, so dass das Ventil 4 vormontiert werden kann. Insbesondere bildet das so vormontierte Ventil 4 eine zusammenhängende Baugruppe, die als Ganzes in den Ventilteller 8 eingesetzt werden kann. Mit anderen Worten sind das Ventilgehäuse 5, das Ventilelement 6, die Dichtung 10 und das Rückstellelement 7 vorzugsweise derart zusammenfügbar bzw. vormontierbar, dass das Ventil 4 bei der Montage der Ventilanordnung 2 bzw. der Abgabevorrichtung 1 als zusammenhängendes Ventil 4 handhabbar sind, insbesondere ohne dass sich die Teile während der Montage voneinander trennen. Dies ist einer einfachen Handhabung zuträglich, da die Anzahl an zu handhabenden einzelnen Bauteilen bei der Montage verringert wird.

Vorzugsweise weist die Ventilanordnung 2 ein (separat hergestelltes) Befestigungsteil 11 zur Befestigung des Ventils 4 bzw. Ventilgehäuses 5 an dem Ventilteller 8 auf. Das Befestigungsteil 11 ist vorzugsweise stoffschlüssig mit dem Ventilteller 8 verbindbar bzw. verbunden.

Das Ventilgehäuse 5, das Ventilelement 6, das Rückstellelement 7, der Ventilteller 8, die Dichtung 10 und das Befestigungsteil 11 bilden vorzugsweise jeweils voneinander baulich getrennte bzw. separat hergestellte Bauteile.

Vorzugsweise bestehen der Ventilteller 8, das Befestigungsteil 11, die Ventilanordnung 2, das Ventil 4, das Ventilgehäuse 5, das Ventilelement 6, das Rückstellelement 7 und/oder der Behälter 3 aus Kunststoff, insbesondere PET bzw. Polyethylenterephthalat.

Vorzugsweise ist der Behälter 3 bzw. die Abgabevorrichtung 1, insbesondere nach Montage der Ventilanordnung 2, mit einem Fluid F befüllbar. Vorzugsweise wird die Abgabevorrichtung 1 bzw. der Behälter 3 zusätzlich zu dem Fluid F mit einem Druckgas bzw. Treibgas G befüllt, so dass das Fluid F in dem Behälter 3 bzw. der Abgabevorrichtung 1 unter Druck steht. Vorzugsweise herrscht in der Abgabevorrichtung 1 ein durch das Treibgas G bewirkter Überdruck.

Ferner kann die Abgabevorrichtung 1 in den Figuren nicht dargestellte weitere Mittel für die Abgabe des Fluids F aufweisen, insbesondere in Form einer Düse, eines Sprühkopfs o. dgl. Dies ermöglicht insbesondere die (kontrollierte) Abgabe des Fluids F in einer gewünschten Abgabeform, beispielsweise als Schaum oder Spray bzw. Aerosol, und/oder die Erzeugung einer gewünschten Abgabeform.

Das Ventil 4 ist vorzugsweise öffenbar und schließbar, insbesondere durch eine Bewegung des Ventilelements 6 relativ und/oder axial zu dem Ventilgehäuse 5.

Vorzugsweise wird zur Abgabe des Fluids F das Ventilelement 6 entgegen der Kraft des Rückstellelements 7 bzw. der Feder in das Ventilgehäuse 5 hineingedrückt bzw. -bewegt, vorzugsweise beispielsweise mittels eines nicht dargestellten Abgabe- oder Sprühkopfs, der insbesondere auf das freie Ende des Ventilelements 6 aufgesteckt oder daran angeschlossen sein kann, so dass sich das Ventil 4 öffnet. Der Druck des Treibgases G treibt dann das Fluid F durch das Ventil 4 aus dem Behälter 3 aus.

Vorzugsweise ist eine an dem Ventil 4 bzw. Ventilgehäuse 5 angeordnete bzw. angeschlossene Zuführung bzw. Steigleitung 12 vorgesehen, durch die das Fluid F bei der Abgabe zunächst aufsteigen kann, um bei der üblichen Gebrauchslage mit nach unten weisendem Behälter 3 über das Ventil 4 ausgegeben zu werden.

Bei der Abgabe gelangt das Fluid F von der Steigleitung 12 in einen Innenraum 5B des Ventilgehäuses 5. Beim Herunterdrücken des Ventilelements 6 wird vorzugsweise ein Querkanal bzw. radial verlaufender Kanal 6A des Ventilelements 6 freigegeben, der im verschlossenen Zustand des Ventils 4 durch die Dichtung 10 abgedichtet ist. Nach dem Durchtritt durch den Kanal 6A tritt das Fluid F oben aus dem Ventilelement 6 heraus. Der Weg des Fluids F bei der Abgabe ist in der rechten Seite in Fig. 2 durch einen Pfeil angedeutet.

Das Ventil 4, insbesondere das Ventilgehäuse 5, ist vorzugsweise mittels des Befestigungsteils 11 an dem Ventilteller 8 gehalten bzw. befestigt.

Der Ventilteller 8 weist vorzugsweise eine Innenseite und eine Außenseite auf. Die Innenseite des Ventiltellers 8 ist die Seite, die dem Innenraum des Behälters 3 zugeordnet ist bzw. nach erfolgter Montage dem Innenraum des Behälters 3 zugewandt ist. In Fig. 1 und 2 ist die untere Seite bzw. Unterseite des Ventiltellers 8 die Innenseite. Die Außenseite des Ventiltellers 8 ist die dem Innenraum des Behälters 3 abgewandte Seite des Ventiltellers 8. In den Fig. 1 und 2 ist die obere Seite bzw. Oberseite des Ventiltellers 8 die Außenseite.

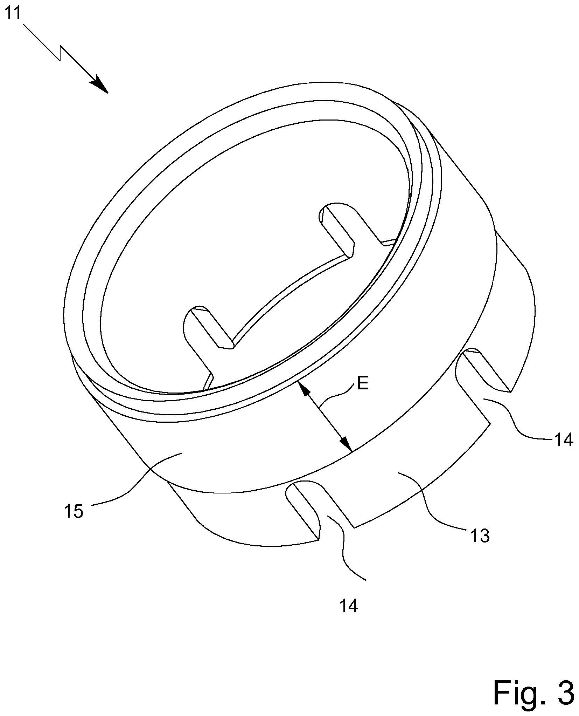

In Fig. 3 ist das Befestigungsteil 11 gemäß der ersten Ausführungsform abgebildet.

Das Befestigungsteil 11 ist vorzugsweise ringartig und/oder zumindest im Wesentlichen zylindrisch bzw. hohlzylindrisch oder hülsenartig ausgebildet.

Vorzugsweise weist das Befestigungsteil 11 einen Kopplungsabschnitt 13 auf. Der Kopplungsabschnitt 13 ist vorzugsweise zur drehfesten Kopplung des Befestigungsteils 11 mit einem (nicht dargestellten) Kopf bzw. Werkzeug bei der Montage ausgebildet. Der Kopf ist vorzugsweise komplementär zu dem Befestigungsteil 11 bzw. dem Kopplungsabschnitt 13 ausgebildet.

Der Kopplungsabschnitt 13 ist vorzugsweise an einem zylindrischen Abschnitt bzw. Bereich des Befestigungsteils 11 angeordnet oder gebildet.

Besonders bevorzugt ist der Kopplungsabschnitt 13 an einer Stirnseite bzw. an einem axialen Ende des Befestigungsteils 11 bzw. des zylindrischen Abschnitts angeordnet und/oder gebildet, wie insbesondere in Fig. 3 dargestellt ist.

Der Kopplungsabschnitt 13 weist vorzugsweise ein oder mehrere, sich axial erstreckende Vorsprünge oder Ausnehmungen 14 auf oder ist durch diese gebildet.

Beim Darstellungsbeispiel gemäß Fig. 3 sind die Ausnehmungen 14 vorzugsweise länglich bzw. als sich axial erstreckende Einschnitte oder Ausschnitte gebildet.

Die Ausschnitte bzw. Ausnehmungen 14 sind vorzugsweise gleichmäßig über den Umfang des Befestigungsteils 11 verteilt. Beim Darstellungsbeispiel gemäß Fig. 3 weist das Befestigungsteil 11 bzw. der Kopplungsabschnitt 13 sechs Ausnehmungen 14 auf. Hier sind jedoch auch andere Lösungen möglich.

Zur Montage der Ventilanordnung 2 gemäß der ersten Ausführungsform wird vorzugsweise das Ventil 4 mit dem Ventilgehäuse 5, dem Ventilelement 6, dem Rückstellelement 7 und der Dichtung 10 in der zugeordneten Aufnahme 9 des Ventiltellers 8 angeordnet, insbesondere von der Innenseite bzw. Unterseite des Ventiltellers 8 in die Aufnahme 9 eingeführt. Davor, gleichzeitig oder danach wird vorzugsweise das Befestigungsteil 11 über das Ventil 4 bzw. Ventilgehäuse 5 geschoben.

Anschließend wird das Ventil 4 bzw. Ventilgehäuse 5 bzw. Befestigungsteil 11 an dem Ventilteller 8 gesichert bzw. befestigt, vorzugsweise durch stoffschlüssiges Verbinden, insbesondere Verschweißen, besonders bevorzugt Reibverschweißen, des Befestigungsteils 11 mit dem Ventilteller 8.

Das Reibverschweißen erfolgt dadurch, dass die beiden miteinander zu verbindenden Bauteile gegeneinandergedrückt und dabei mit hoher Geschwindigkeit relativ zueinander rotiert werden. Durch die hohe Rotationsgeschwindigkeit erwärmen sich die zu verbindenden Bauteile aufgrund der Reibung so stark, dass die Bauteile zumindest an ihrer Kontaktfläche schmelzen bzw. aufgeschmolzen oder plastifiziert werden und sich dadurch stoffschlüssig miteinander verbinden. Vorzugsweise sind die zu verschweißenden Bauteile sortenrein bzw. aus dem gleichen oder einem ähnlichen Material hergestellt. Gegebenenfalls können durch Reibschweißen jedoch auch Bauteile miteinander verschweißt werden, die aus verschiedenen Materialien hergestellt sind, beispielsweise Metall- und Kunststoffteile.

Besonders bevorzugt wird das Befestigungsteil 11 mit dem Ventilteller 8 radial verschweißt. Insbesondere bildet also die Schweißnaht bzw. Schweißverbindung eine Verbindung, die sich radial zwischen dem Befestigungsteil 11 und dem Ventilteller 8 bzw. einem Abschnitt des Ventiltellers 8 erstreckt oder radial verläuft bzw. das Befestigungsteil 11 und den Ventilteller 8 radial miteinander verbindet.

Die Schweißnaht bzw. Schweißverbindung ist vorzugsweise ringartig und/oder umlaufend ausgebildet, insbesondere bezüglich der Achse L.

Das Befestigungsteil 11 weist vorzugsweise einen Verschweißbereich 15 auf.

Der Verschweißbereich 15 ist vorzugsweise an einer Außenseite bzw. Umfangsfläche des Befestigungsteils 11 bzw. eines zylindrischen Abschnitts des Befestigungsteils 11 angeordnet, zumindest bei der ersten Ausführungsform.

Vorzugsweise ist der Verschweißbereich 15 ringartig oder wulstartig ausgebildet und/oder umgibt der Verschweißbereich 15 das Befestigungsteil 11, insbesondere vollständig. Insbesondere ist der Verschweißbereich 15 ringnutartig ausgebildet und/oder bildet der Verschweißbereich 15 eine Verdickung des Befestigungsteils 11. Vorzugsweise steht der Verschweißbereich 15 von dem Befestigungsteil 11 radial vor oder ragt der Verschweißbereich 15 von dem Befestigungsteil 11 radial ab.

Der Verschweißbereich 15 bildet vorzugsweise eine Schulter, eine Stufe oder einen Vorsprung an der Außenseite des Befestigungsteils 11.

Der Verschweißbereich 15 ist insbesondere dazu ausgebildet, beim Verschweißen bzw. Reibverschweißen aufgeschmolzen bzw. plastifiziert zu werden, so dass die stoffschlüssige Verbindung bzw. Schweißverbindung des Befestigungsteils 11 mit dem Ventilteller 8 entsteht.

Unter "Plastifizieren" wird bei der vorliegenden Erfindung insbesondere ein Vorgang verstanden, bei der ein Material, insbesondere Kunststoff oder Metall, vorzugsweise durch Erhitzen in einen Zustand überführt wird, in dem es plastisch verformbar ist.

Der Verschweißbereich 15 ist vorzugsweise möglichst großflächig ausgebildet.

Insbesondere weist der Verschweißbereich 15 in axialer Richtung bzw. axial oder parallel zur Längsachse L eine Erstreckung E von mindestens 3 mm, bevorzugt etwa 5 mm oder mehr, auf.

Vorzugsweise ist der Verschweißbereich 15 in axialer Richtung mittig und/oder von den axialen Endseiten des Befestigungsteils 11 beabstandet angeordnet. Hier sind jedoch auch andere Lösungen möglich.

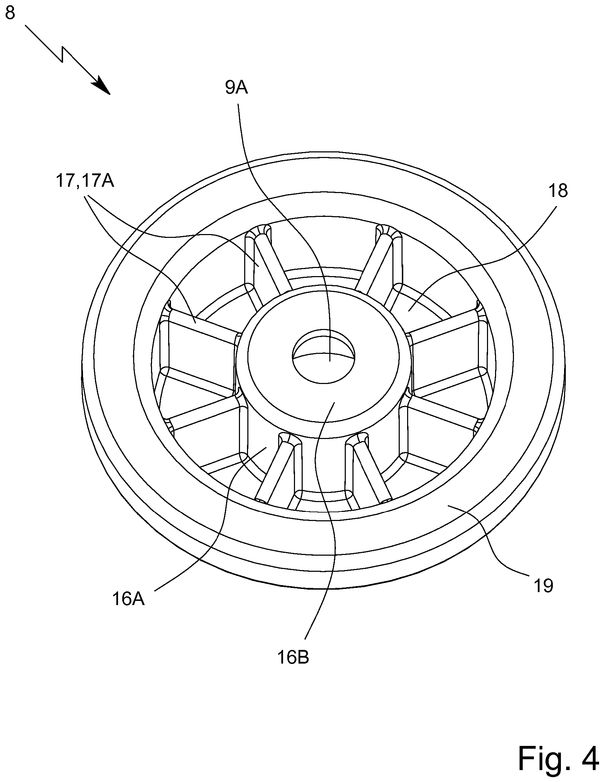

In Fig. 4 ist der Ventilteller 8 gemäß der ersten Ausführungsform dargestellt.

Der Ventilteller 8 bzw. die Aufnahme 9 weist vorzugsweise einen Aufnahmeraum 16 zur Aufnahme des Ventils 4 bzw. des Ventilgehäuses 5 auf. Der Aufnahmeraum 16 ist insbesondere zentral bzw. mittig und/oder symmetrisch zur Achse L an dem Ventilteller 8 angeordnet.

Beim Darstellungsbeispiel gemäß Fig. 4 ist der Aufnahmeraum 16 auf der Innenseite des Ventiltellers 8 angeordnet. Der Aufnahmeraum 16 ist vorzugsweise zumindest im Wesentlichen zylindrisch ausgebildet.

Die Aufnahme 9 ist vorzugsweise gebildet durch den Aufnahmeraum 16 und/oder eine den Aufnahmeraum 16 bildende bzw. begrenzende Wandung des Ventiltellers 8. Die Wandung des Ventiltellers 8 weist vorzugsweise einen zylindrischen, insbesondere axial verlaufenden, Wandungsabschnitt 16A und einen kreisscheibenartig ausgebildeten quer bzw. senkrecht zur Längsachse L verlaufenden Wandungsabschnitt 16B auf, der die Aufnahme 9 bzw. den Aufnahmeraum 16 axial begrenzt bzw. abschließt. Die Wandungsabschnitte 16A, 16B werden im Folgenden auch verkürzt als Abschnitte 16A, 16 B bezeichnet. Vorzugsweise begrenzt der zylindrische Abschnitt 16A die Aufnahme 9 bzw. den Aufnahmeraum 16 seitlich bzw. bildet der zylindrische Abschnitt 16A eine Mantelfläche des Aufnahmeraums 16 bzw. der Aufnahme 9.

Der kreisscheibenartige Abschnitt 16B der Wandung weist vorzugsweise eine mittige bzw. zentrale Öffnung oder Durchbrechung 9A zur Durchführung des Ventilelements 6 nach außen oder zum Eindrücken des Ventilelements 6 von außen auf.

Die Öffnung bzw. Durchbrechung 9A für das Ventilelement 6 weist einen geringeren Durchmesser als der Aufnahmeraum 16 auf, so dass der Abschnitt 16B das Ventil 4 bzw. das Ventilgehäuse 5 und die Dichtung 10 formschlüssig axial in der Aufnahme 9 bzw. dem Aufnahmeraum 16 hält bzw. halten kann.

Vorzugsweise ist das Befestigungsteil 11, insbesondere gemeinsam mit dem Ventil 4 bzw. Ventilgehäuse 5, in dem Aufnahmeraum 16 angeordnet, insbesondere radial zwischen dem Ventilgehäuse 5 und dem Abschnitt 16A des Ventiltellers 8 anordenbar, wie insbesondere in Fig. 2 erkennbar.

Der Außendurchmesser des Befestigungsteils 11 bzw. Verschweißbereichs 15 und der (Innen-)Durchmesser des Aufnahmeraums 16 sind vorzugsweise derart aufeinander abgestimmt, dass der Außendurchmesser des Befestigungsteils 11 bzw. Verschweißbereichs 15 etwas größer ist, insbesondere um mindestens 0,1 mm und/oder höchstens 2 mm, als der zugeordnete (Innen-)Durchmesser des Aufnahmeraums 16 bzw. des Abschnitts 16A, so dass das Befestigungsteil 11 mit dem Aufnahmeraum 16 bzw. Abschnitt 16A des Ventiltellers 8 reibverschweißbar ist.

Das Befestigungsteil 11 ist beim Darstellungsbeispiel ohne Verformung vorzugsweise nicht bzw. nicht vollständig bzw. nicht bis zu seiner Montagelage in den Aufnahmeraum 16 axial einführbar. Vorzugsweise steht der Verschweißbereich 15 von dem Befestigungsteil 11 radial vor, so dass das Befestigungsteil 11 zunächst bzw. bevor der Reibverschweißvorgang beginnt, ein kleines Stück in den Aufnahmeraum 16 axial eingeführt und/oder in dem Aufnahmeraum 16 zentriert werden kann, bis die von dem Verschweißbereich 15 gebildete Schulter an dem Abschnitt 16A zur Anlage kommt.

Der "zu große" Durchmesser des Befestigungsteils 11 bewirkt insbesondere, dass beim Rotieren des Befestigungsteils 11 bzw. beim Reibverschweißen des Befestigungsteils 11 mit dem Ventilteller 8, während das Befestigungsteil 11 axial in seine Montagelage bewegt wird, der Verschweißbereich 15 durch Reibungswärme aufgeschmolzen bzw. plastifiziert wird, so dass das Befestigungsteil 11 zumindest in dem Verschweißbereich 15 verformt wird und vollständig in den Aufnahmeraum 16 eingeführt werden kann, wobei sich das Befestigungsteil 11 stoffschlüssig mit dem Ventilteller 8 verbindet.

Es sind auch umgekehrte Lösungen möglich, bei denen anstatt des Befestigungsteils 11 der Aufnahmeraum 16 bzw. der Abschnitt 16A den Verschweißbereich 15, insbesondere auf einer Innenseite, aufweist. Die vorigen Erläuterungen gelten in diesem Fall vorzugsweise umgekehrt bzw. analog.

Vorzugsweise ist das Ventil 4 bzw. Ventilgehäuse 5 axial einerseits durch das Befestigungsteil 11 und andererseits durch den Abschnitt 16B des Ventiltellers 8 formschlüssig in dem Ventilteller 8 gehalten.

Vorzugsweise weist das Ventilgehäuse 5, insbesondere außenseitig, eine Verbreiterung oder Schulter 5A auf oder bildet eine solche. Die Schulter 5A springt vorzugsweise radial von dem Ventilgehäuse 5 vor. Vorzugsweise ist die Schulter 5A durch ein oder mehrere Elemente oder Rippen gebildet, die radial von einem zumindest im Wesentlichen zylindrischen Abschnitt des Ventilgehäuses 5 abragen bzw. vorspringen.

Das Ventilgehäuse 5 ist vorzugsweise mit der Schulter 5A an dem Befestigungsteil 11 axial abgestützt oder umgekehrt. Die Schulter 5A bildet vorzugsweise einen Anschlag für das Befestigungsteil 11.

Vorzugsweise liegt bei der fertig montierten Abgabevorrichtung 1 bzw. Ventilanordnung 2 das Befestigungsteil 11 fest an dem Ventilgehäuse 5 an und liegt das Ventilgehäuse 5 fest an dem Ventilteller 8 an, so dass das Ventilgehäuse 5 (zumindest axial) fest bzw. unbeweglich zwischen dem Ventilteller 8 und dem Befestigungsteil 11 gehalten ist.

Radial ist das Ventilgehäuse 5 vorzugsweise dadurch fest bzw. unbeweglich bzw. formschlüssig in der Aufnahme 9 bzw. dem Aufnahmeraum 16 gehalten, dass die Rippen, die die Schulter 5A aufweisen bzw. bilden, radial an dem Abschnitt 16A bzw. dessen Innenseite anliegen.

Der Ventilteller 8 weist vorzugsweise eine Kopplungseinrichtung 17 auf. Die Kopplungseinrichtung 17 ist vorzugsweise zur drehfesten Kopplung des Ventiltellers 8 mit einem Werkzeug bzw. Halter 27 ausgebildet, so dass der Ventilteller 8 beim Reibverschweißen mit dem Werkzeug bzw. Halter 27 insbesondere formschlüssig gehalten und/oder rotiert werden kann.

Die Kopplungseinrichtung 17 ist vorzugsweise auf der Außenseite des Ventiltellers 8 angeordnet.

Besonders bevorzugt weist der Ventilteller 8 einen zur Achse L koaxialen Ringraum 18. Die Kopplungseinrichtung 17 ist vorzugsweise in dem Ringraum 18 gebildet oder angeordnet.

Umfangsseitig wird der Ringraum 18 vorzugsweise durch den (Wandungs- )Abschnitt 16A begrenzt.

Besonders bevorzugt ist die Kopplungseinrichtung 17 durch sich radial erstreckende Stege, Rippen oder Kopplungselemente 17A gebildet oder weist diese auf. Die Kopplungselemente 17A sind vorzugsweise auf der Außenseite des Ventiltellers 8, insbesondere in dem Ringraum 18, angeordnet oder gebildet.

Beim Darstellungsbeispiel gemäß Fig. 4 sind die Kopplungselemente 17A durch sich radial in dem Ringraum 18 erstreckende Wände oder Wandelemente gebildet, vorzugsweise wobei die Kopplungselemente 17A den Ringraum in Sektoren unterteilen.

Gemäß einem weiteren, auch unabhängig realisierbaren Aspekt ist bei der Abgabevorrichtung 1 der Ventilteller 8 mit dem Behälter 3 vorzugsweise reibverschweißt.

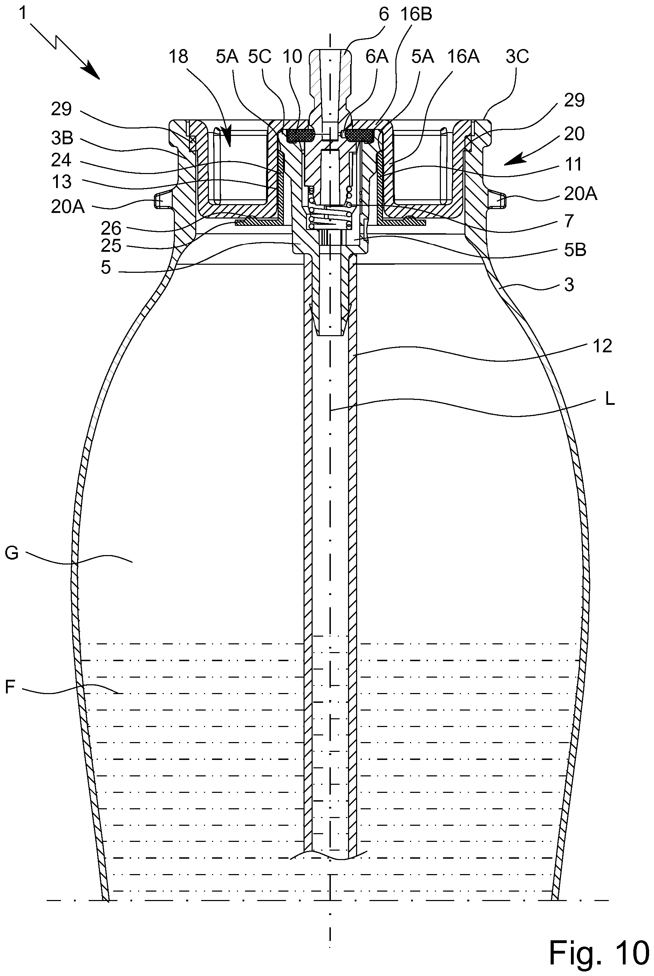

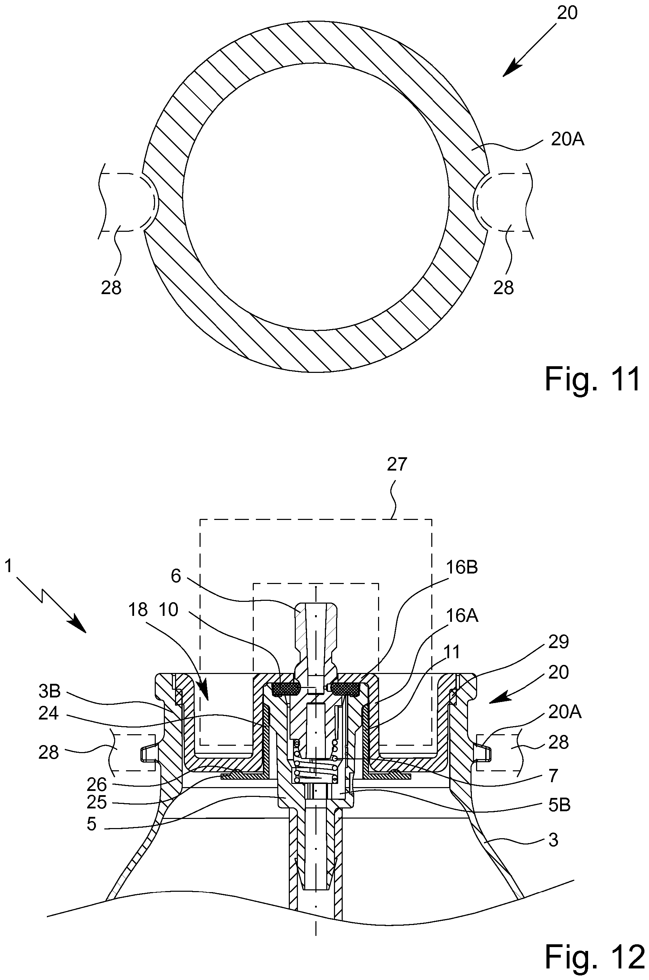

Vorzugsweise weist der Ventilteller 8 an einem äußeren Rand einen Kragen 19 auf. Es sind jedoch auch Ausführungsformen ohne Kragen 19 möglich, worauf später insbesondere mit Bezug auf Fig. 10 und 12 noch eingegangen wird.

Vorzugsweise bildet der Kragen 19 eine nach unten bzw. in Richtung des Behälters 3 offene Ringnut zur Aufnahme des Randes 3C des Behälters 3.

Vorzugsweise wird das der Ventilteller 8 im Bereich des Kragens 19 mit einer die Öffnung 3A des Behälters 3 bildende oder begrenzende Wandung reibverschweißt. Vorzugsweise umgibt der Kragen 19 die die Öffnung 3A bildende Wandung.

Es kann auch eine Dichtung bzw. ein Dichtring vorgesehen sein, die vorzugsweise vor dem Verschweißen des Ventiltellers 8 mit dem Behälter 3 in dem Kragen 19 angeordnet wird, insbesondere um einen dichten Verschluss des Behälters 3 sicherzustellen.

Der Behälter 3 weist vorzugsweise einen Kopplungsabschnitt 20 auf. Der Kopplungsabschnitt 20 ist insbesondere in einem die Öffnung 3A umgebenden und/oder bildenden Halsbereich 3B des Behälters 3 angeordnet.

Der Kopplungsabschnitt 20 ist vorzugsweise zur drehfesten Kopplung des Behälters 3 mit einem Werkzeug bzw. Halter 28 zum bzw. beim Reibverschweißen des Ventiltellers 8 mit dem Behälter 3 ausgebildet. Dies ist insbesondere in Fig. 11 und 12 dargestellt.

Vorzugsweise ist der Kopplungsabschnitt 20 durch ein oder mehrere radial von dem Behälter 3 bzw. dem Halsbereich 3B abragende Kopplungselemente 20A gebildet oder weist diese auf. Die Kopplungselemente 20A können gleichmäßig verteilt an dem Halsbereich 3B bzw. Behälter 3 angeordnet sein. Es ist auch möglich, dass der Kopplungsabschnitt lediglich ein den Behälter 3 bzw. die Öffnung 3A kragenartig umlaufendes Kopplungselement 20A aufweist.

In dem Halsbereich 3B ist die Wandung des Behälters 3 vorzugsweise dicker bzw. verstärkt.

Vorzugsweise sind in dem Halsbereich 3B des Behälters 3 und/oder dem Kragen 19 des Ventiltellers 8 eine Stufe bzw. ein Vorsprung gebildet, die eine einfache Zentrierung bzw. Anordnung oder anfängliche Führung des Ventiltellers 8 in der Öffnung 3A vor dem Reibverschweißen ermöglichen.

Die beim Reibverschweißen zwischen dem Behälter 3 bzw. dem Halsbereich 3B und dem Ventilteller 8 gebildete Schweißnaht bzw. Schweißverbindung weist vorzugsweise eine axiale Erstreckung von mindestens 3 mm, insbesondere 5 mm oder mehr auf. Hierdurch ist eine sichere Befestigung des Ventiltellers 8 an dem Behälter 3 sichergestellt.

Das Treibgas wird vorzugsweise unter großem Druck in die (fertig montierte und vorzugsweise bereits mit dem Fluid F befüllte) Abgabevorrichtung 1, bei der das Befestigungsteil 11 mit dem Ventilteller 8 und der Ventilteller 8 mit dem Behälter 3 fest verbunden ist, eingebracht. Durch den hohen Druck verformt das Treibgas G die Dichtung 10, so dass sich zwischen der Dichtung 10 und dem Abschnitt 16B ein Spalt bildet. Das Treibgas G kann nun zunächst zwischen dem Ventilelement 6 und dem Abschnitt 16B und anschließend durch den Spalt zwischen der Dichtung 10 und dem Abschnitt 16B hindurchtreten. Anschließend gelangt das Treibgas G durch Kanäle 5C, die zwischen den Rippen des Ventilgehäuses 5, die die Schulter 5A bilden, und dem Abschnitt 16A gebildet sind, an dem Ventilgehäuse 5 und dem Befestigungsteil 11 vorbei in den Innenraum des Behälters 3. Der Weg des Treibgases G beim Befüllen der Abgabevorrichtung 1 ist in Fig. 2 auf der linken Seite durch einen Pfeil angedeutet.

Nachfolgend wird insbesondere eine zweite Ausführungsform der Abgabevorrichtung 1 bzw. Ventilanordnung 2 erläutert.

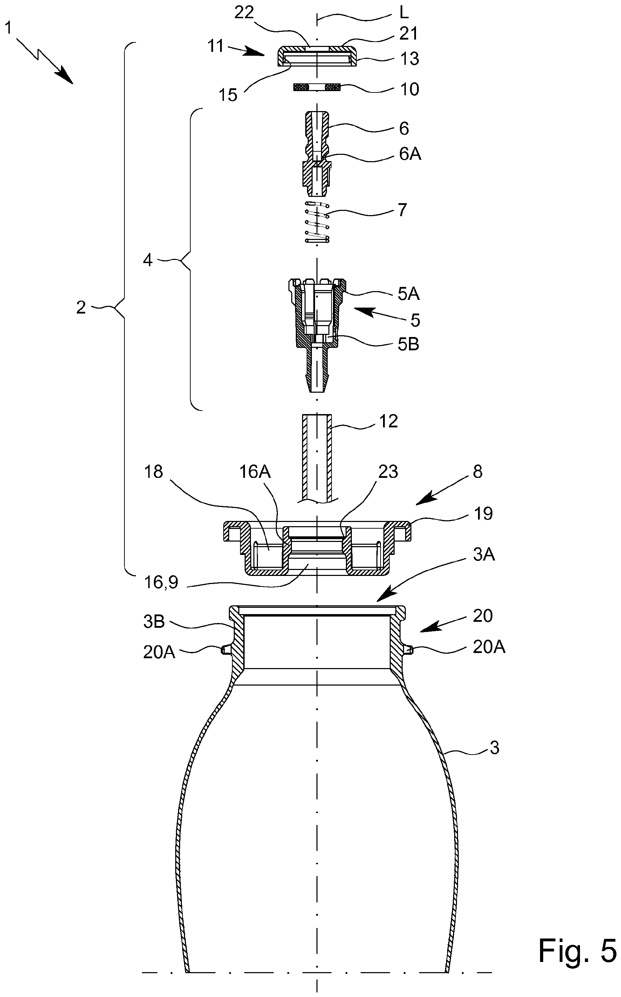

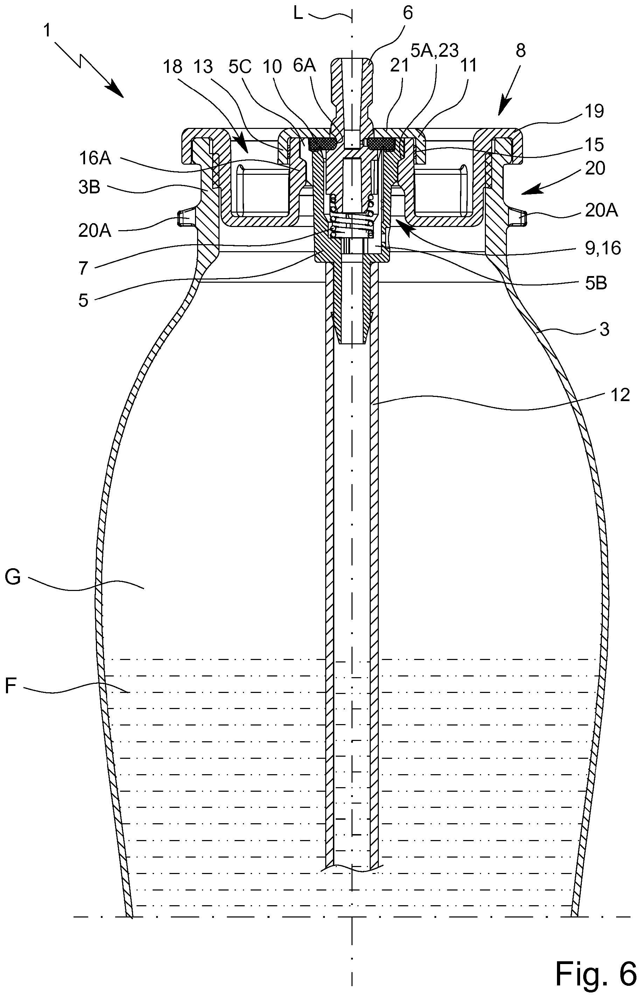

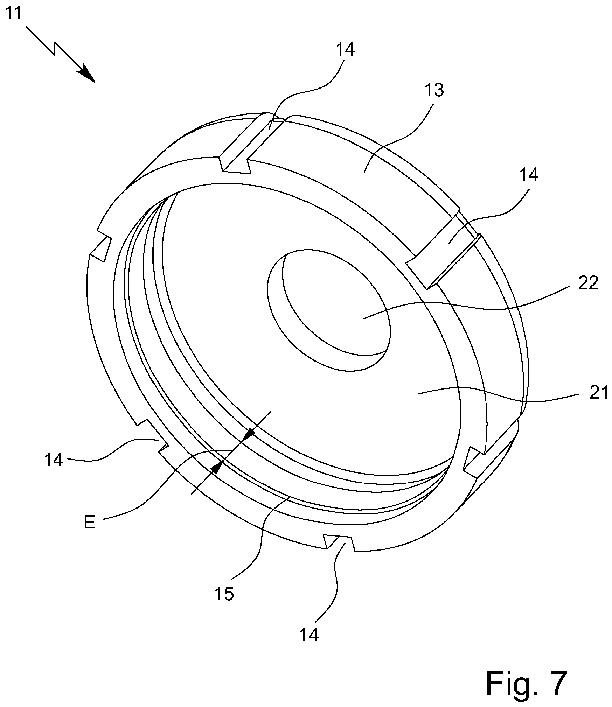

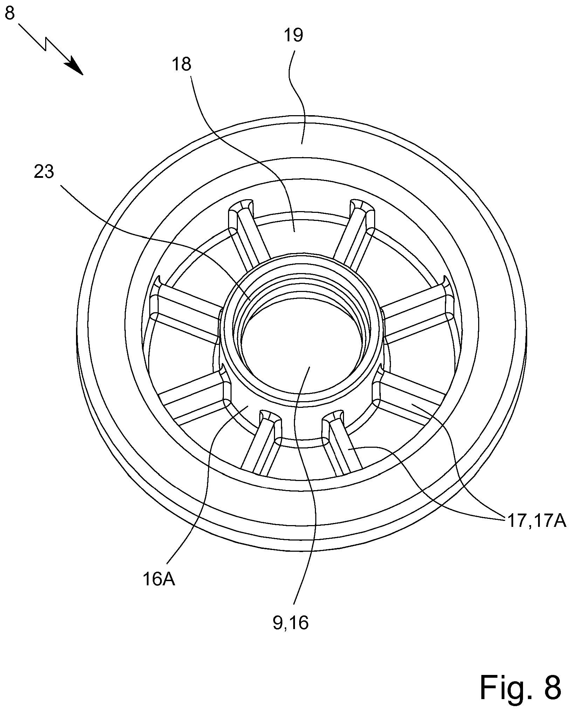

Die Fig. 5 und 6 zeigen eine Abgabevorrichtung 1 gemäß einer zweiten Ausführungsform. In den Fig. 7 und 8 sind das Befestigungsteil 11 und der Ventilteller 8 gemäß der zweiten Ausführungsform dargestellt.

Vorzugsweise wird im Folgenden primär nur auf Unterschiede der zweiten Ausführungsform zur ersten Ausführungsform eingegangen, so dass die vorherigen Erläuterungen und Merkmale für die zweite Ausführungsform insbesondere entsprechend bzw. ergänzend gelten, sofern nichts anderes explizit erwähnt ist, auch wenn eine wiederholte Beschreibung weggelassen ist.

Vorzugsweise unterscheidet sich die zweite Ausführungsform von der ersten Ausführungsform durch eine andere Ausbildung des Befestigungsteils 11 und des Ventiltellers 8.

Das Befestigungsteil 11 ist vorzugsweise kappenartig ausgebildet. Insbesondere schließt sich an einen hohlzylindrischen, hülsenartigen bzw. ringartigen Abschnitt des Befestigungsteils 11 endseitig eine quer, insbesondere senkrecht, zu der Achse L verlaufende Stirnwand 21 an.

Die Stirnwand 21 weist vorzugsweise eine Durchbrechung 22 für das Ventil 4 bzw. Ventilelement 6 auf, die vorzugsweise zentral bzw. mittig angeordnet ist.

Beim Darstellungsbeispiel gemäß Fig. 7 weist der Kopplungsabschnitt 13 Ausnehmungen 14 in Form von länglichen bzw. sich axial erstreckenden radiale Einbuchtungen des äußeren Rands des Befestigungsteils 11 bzw. dessen zylindrischen Abschnitts auf oder ist durch diese gebildet. Hier sind jedoch auch andere Lösungen denkbar, beispielsweise radiale Vorsprünge.

Die Ausnehmungen 14 bzw. Einbuchtungen sind vorzugsweise symmetrisch an dem Befestigungsteil 11 angeordnet. Im Darstellungsbeispiel gemäß Fig. 7 weist das Befestigungsteil 11 bzw. der Kopplungsabschnitt 13 sechs Ausnehmungen 14 auf. Hier sind jedoch auch andere Lösungen möglich.

Vorzugsweise wird bzw. ist bei der zweiten Ausführungsform das Befestigungsteil 11 auf der Außenseite des Ventiltellers 8 angeordnet.

Zur Montage der Ventilanordnung 2 gemäß der zweiten Ausführungsform wird vorzugsweise das Ventil 4 mit dem Ventilgehäuse 5, dem Ventilelement 6, dem Rückstellelement 7 und der Dichtung 10 in der zugeordneten Aufnahme 9 des Ventiltellers 8 angeordnet, insbesondere von der Außenseite bzw. Oberseite des Ventiltellers 8 in die Aufnahme eingeführt. Davor, gleichzeitig oder danach wird vorzugsweise das Befestigungsteil 11 über das Ventil 4 bzw. Ventilgehäuse 5 geschoben.

Anschließend wird vorzugsweise das Ventil 4 bzw. Ventilgehäuse 5 an dem Ventilteller 8 gesichert bzw. befestigt. Die Sicherung bzw. Befestigung des Ventils 4 bzw. Ventilgehäuses 5 an dem Ventilteller 8 erfolgt vorzugsweise durch stoffschlüssiges Verbinden, insbesondere Verschweißen, des Befestigungsteils 11 mit dem Ventilteller 8.

Besonders bevorzugt wird das Befestigungsteil 11 mit dem Ventilteller 8 reibverschweißt.

Der Ventilteller 8 gemäß der zweiten Ausführungsform unterscheidet sich von dem Ventilteller 8 gemäß der ersten Ausführungsform vorzugsweise (hauptsächlich) in der Ausgestaltung bzw. Ausbildung der Aufnahme 9 und/oder des Aufnahmeraums 16.

Vorzugsweise ist die Aufnahme 9 bzw. der Aufnahmeraum 16 zumindest im Wesentlichen zylindrisch ausgebildet. Vorzugsweise ist der Aufnahmeraum 16 bzw. die Aufnahme 9 im Gegensatz zur ersten Ausführungsform jedoch nicht einseitig durch einen quer zur Längsachse L verlaufenden (Wandungs-)Abschnitt 16B des Ventiltellers 8 begrenzt. Die Funktion des Abschnitts 16B wird bei der zweiten Ausführungsform vorzugsweise von der Deckelfläche 21 des Befestigungsteils 11 übernommen.

Vorzugsweise ist in der Aufnahme 9 bzw. dem Aufnahmeraum 16 eine Stützfläche 23 bzw. ein Vorsprung gebildet oder angeordnet. Durch die Stützfläche 23 ist der Durchmesser des Aufnahmeraums 16 im Bereich der Stützfläche 23 vorzugsweise verringert.

Die Stützfläche 23 kann durch mehrere einzelne, in dem Aufnahmeraum 16 angeordnete Elemente gebildet sein. Bevorzugt ist die Stützfläche 23 als einstückig umlaufender Ring bzw. axialer Anschlag für die Schulter 5A des Ventilgehäuses 5 ausgebildet.

Die Stützfläche 23 ist vorzugsweise dazu ausgebildet, das Ventil 4 bzw. Ventilgehäuse 5 axial formschlüssig in der Aufnahme 9 bzw. dem Aufnahmeraum 16 zu halten bzw. ein Durchrutschen des Ventils 4 bzw. Ventilgehäuses 5 durch die Aufnahme 9 bzw. den Aufnahmeraum 16 zu verhindern.

Die Stützfläche 23 ist vorzugsweise zur Anlage an der Schulter 5A des Ventilgehäuses 5 ausgebildet bzw. der Schulter 5A des Ventilgehäuses 5 zugeordnet. Die Stützfläche 23 bildet vorzugsweise einen Anschlag.

Die Stützfläche 23 übernimmt bei der zweiten Ausführungsform vorzugsweise zumindest teilweise die Funktion des Befestigungsteils 11 bei der ersten Ausführungsform, welches das Ventilgehäuse 5 formschlüssig durch Abstützung an der Schulter 5A des Ventilgehäuses 5 in der Aufnahme 9 bzw. dem Aufnahmeraum 16 hält.

Bei der zweiten Ausführungsform weist das Befestigungsteil 11 den Verschweißbereich 15 vorzugsweise auf einer Innenseite bzw. an einem inneren Rand des zylindrischen Abschnitts auf. Der Verschweißbereich 15 steht vorzugsweise radial nach innen von dem Befestigungsteil 11 bzw. zylindrischen Abschnitt vor. Vorzugsweise ist der Verschweißbereich 15 bei dem Befestigungsteil 11 gemäß der zweiten Ausführungsform nicht axial versetzt bzw. verschoben zu dem Kopplungsabschnitt 13 an dem Befestigungsteil 11 angeordnet bzw. gebildet.

Bei dem Befestigungsteil 11 gemäß der zweiten Ausführungsform ist der Verschweißbereich 15 vorzugsweise an einer Innenseite bzw. Innenfläche des Befestigungsteils 11 bzw. eines zylindrischen Abschnitts des Befestigungsteils 11 angeordnet.

Die Innenseite des Befestigungsteils 11 wird vorzugsweise mit dem Wandungsabschnitt 16A verschweißt, der die innere Begrenzung bzw. eine innere Wandung des Ringraums 18 bildet.

Der Innendurchmesser des Befestigungsteils 11 bzw. Verschweißbereichs 15 und der (Außen-)Durchmesser des Abschnitts 16A sind vorzugsweise derart aufeinander abgestimmt, dass der Innendurchmesser des Befestigungsteils 11 bzw. Verschweißbereichs 15 etwas kleiner ist, insbesondere um mindestens 0,1 mm und/oder höchstens 2 mm, als der (Außen-)Durchmesser des Abschnitts 16A, so dass das Befestigungsteil 11 mit dem Abschnitt 16A reibverschweißbar ist. Das Befestigungsteil 11 ist daher ohne Verformung vorzugsweise nicht über den Abschnitt 16A bzw. den Aufnahmeraum 16 schiebbar. Der "zu kleine" Durchmesser des Befestigungsteils 11 bewirkt insbesondere, dass beim Rotieren des Befestigungsteils 11 bzw. beim Reibverschweißen des Befestigungsteils 11 mit dem Ventilteller 8 der Verschweißbereich 15 durch Reibungswärme aufgeschmolzen bzw. plastifiziert wird, so dass das Befestigungsteil 11 zumindest in dem Verschweißbereich 15 verformbar ist und über den Aufnahmeraum 16 geschoben werden kann, wobei sich das Befestigungsteil 11 stoffschlüssig mit dem Ventilteller 8 bzw. dessen Wandungsabschnitt 16A verbindet.

Auch bei der zweiten Ausführungsform ist eine umgekehrte Anordnung möglich, bei der der Verschweißbereich 15 an der Außenseite des Abschnitts 16A anstatt an der Innenseite des Befestigungsteils 11 angeordnet ist.

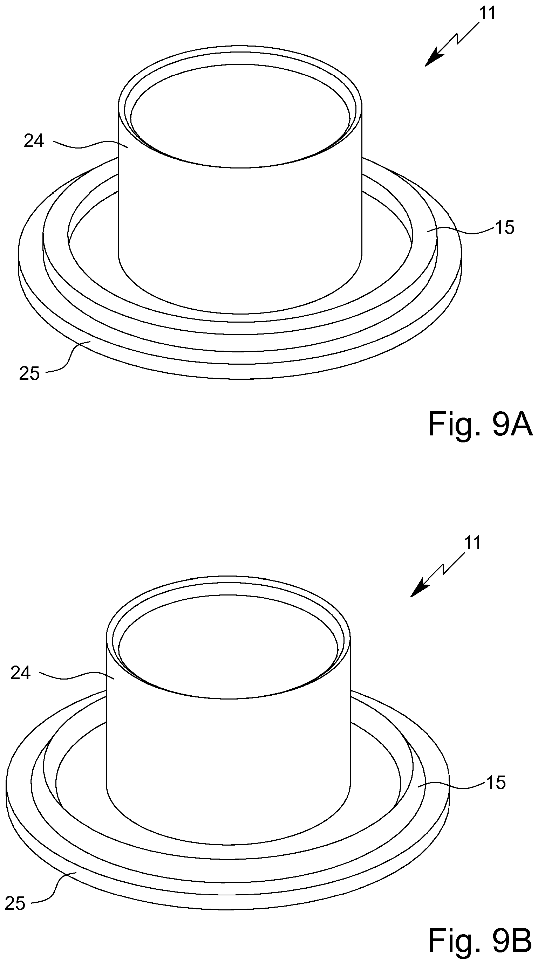

Nachfolgend werden insbesondere eine dritte und vierte Ausführungsform der vorliegenden Erfindung anhand der Fig. 9A, 9B, 10, 11 und 12 erläutert. Insbesondere werden vorrangig Unterschiede zu der ersten und zweiten Ausführungsform erläutert. Sofern keine Abweichungen oder Unterschiede zwischen den Ausführungsformen erläutert sind, gelten die voranstehenden Ausführungen vorzugsweise auch für die nachfolgend beschriebene dritte und vierte Ausführungsform.

Im Gegensatz zu den bisher erläuterten Ausführungsformen ist bei der dritten und vierten Ausführungsform vorgesehen, dass das Befestigungsteil 11 mit dem Ventilteller 8 laserverschweißt oder ultraschallverschweißt statt reibverschweißt wird.

Das Befestigungsteil 11 gemäß der dritten bzw. vierten Ausführungsform weist einen ersten Abschnitt 24 und einen zweiten Abschnitt 25 auf.

Der erste Abschnitt 24 ist zylindrisch bzw. hohlzylindrisch ausgebildet. Der erste Abschnitt 24 kann jedoch auch leicht konisch ausgebildet sein. Auf diese Weise kann eine Klemmwirkung erreicht werden, wenn das Befestigungsteil 11 bzw. der erste Abschnitt 24 in den Aufnahmeraum 16 des Ventiltellers 8 eingeführt wird.

Der zweite Abschnitt 25 ragt radial von dem ersten Abschnitt 24 ab. Vorzugsweise ist der zweite Abschnitt 25 zumindest im Wesentlichen rechtwinklig zu dem ersten Abschnitt 24 angeordnet.

Der zweite Abschnitt 25 ist vorzugsweise an einem axialen Ende des Befestigungsteils 11 angeordnet.

Der zweite Abschnitt 25 ist vorzugsweise flansch- oder kragenartig ausgebildet.

Vorzugsweise ist der zweite Abschnitt 25 zur Anlage an die untere bzw. sich in radialer Richtung erstreckende Begrenzungsfläche des Ringraums 18 des Ventiltellers 8 ausgebildet.

Das Befestigungsteil 11, insbesondere der zweite Abschnitt 25, weist vorzugsweise den Verschweißbereich 15 auf. Insbesondere ist der Verschweißbereich 15 ringartig ausgebildet und/oder koaxial zu dem ersten Abschnitt 24 angeordnet. Grundsätzlich ist es jedoch möglich, dass der Verschweißbereich 15 durch mehrere nichtzusammenhängende, insbesondere kleinflächige und/oder punktartige, Erhebungen gebildet ist, sodass beim Verschweißen keine durchgängige Schweißnaht 26 gebildet wird, sondern nur punktuelle Schweißverbindungen.

Gemäß der in Fig. 9A dargestellten Ausführungsform ist der Verschweißbereich 15 (im Querschnitt) rechteckig ausgebildet. Der Verschweißbereich 15 kann jedoch auch, wie insbesondere in Fig. 9 B dargestellt, einen dreieckigen Querschnitt aufweisen. Grundsätzlich sind jedoch auch andere Formen des Querschnitts des Verschweißbereichs 15 möglich, beispielsweise rundliche, insbesondere halbkreisförmige, oder sonstige Querschnitte.

Der Verschweißbereich 15 ist insbesondere dazu ausgebildet, beim Laserschweißen bzw. Ultraschallschweißen zu plastifizieren und somit eine Schweißnaht 26 zwischen dem Befestigungsteil 11 und dem Ventilteller 8 zu bilden. Es ist insbesondere möglich, dass das mit dem Ventilteller 8 verschweißte Befestigungsteil 11 nicht vollflächig an dem Ventilteller 8 anliegt, sondern vorzugsweise nur im Bereich der Schweißnaht 26. Hierdurch können Unebenheiten und/oder Toleranzen des Ventiltellers 8 und/oder des Befestigungsteils 11 ausgeglichen werden. Hierdurch ist zuverlässig sichergestellt, dass insbesondere die Dichtung 10 fest eingespannt ist und das Ventilgehäuse 5 ohne Spiel im Ventilteller 8 sitzt und ohne Spiel zwischen dem Ventilteller 8 und dem Befestigungsteil 11 eingeklemmt ist.

Der Verschweißbereich 15 bildet vorzugsweise eine Erhebung bzw. einen Materialüberschuss des zweiten Abschnitts 25. Die (axiale) Dicke bzw. Höhe des Verschweißbereichs 15 beträgt vorzugsweise mehr als 0,2 mm und/oder weniger als 1,2 mm, insbesondere etwa 0,8 mm. Hierdurch können vorzugsweise Unebenheiten des Ventiltellers 8 und/oder des Befestigungsteils 11 und/oder axiale Toleranzen ausgeglichen werden.

Zur Herstellung bzw. Verbindung der Ventilanordnung 2 wird zunächst das Ventil 4 in die Aufnahme 9 bzw. den Aufnahmeraum 16 eingeführt, insbesondere von der Innenseite des Ventiltellers 8. Anschließend wird das Befestigungsteil 11 ebenfalls in die Aufnahme 9 bzw. den Aufnahmeraum 16 eingeführt, so dass das Ventil 4 zwischen dem Ventilteller 8 und dem Befestigungsteil 11 angeordnet, insbesondere dazwischen eingeklemmt, ist.

Der Ventilteller 8, das Ventil 4 bzw. Ventilgehäuse 5 und das Befestigungsteil 11 sind vorzugsweise derart bemessen bzw. aufeinander abgestimmt, dass der zweite Abschnitt 25 bzw. der Verschweißbereich 15 an einer Unterseite des Ventiltellers 8, insbesondere flächig, anliegt, wenn das Befestigungsteil 11 vollständig in die Aufnahme 9 bzw. den Aufnahmeraum 16 eingeführt ist und da das Ventil 4 zwischen dem Ventilteller 8 und dem Befestigungsteil 11 eingeklemmt ist.

Vorzugsweise ist der Ventilteller 8 aus einem laserabsorbierenden und/oder dunklen, insbesondere schwarzen, Material hergestellt und ist das Befestigungsteil 11 bzw. zumindest der zweite Abschnitt 25 aus einem transparenten, insbesondere lasertransparenten, Material hergestellt, so dass der Ventilteller 8 zum Herstellen der Schweißverbindung mit dem Befestigungsteil 11 durch das Befestigungsteil 11 hindurch mit einem Laser bestrahlt werden kann. Der Laserstrahl kann also vorzugsweise durch das Befestigungsteil 11 hindurchtreten, ohne absorbiert zu werden.

Zum Verbinden bzw. Verschweißen des Ventiltellers 8 mit dem Befestigungsteil 11 wird vorzugsweise ein Laserdurchstrahlschweißverfahren oder ein Ultraschallschweißverfahren angewendet.

Vorzugsweise wird der Ventilteller 8 bzw. dessen Innenseite durch das Befestigungsteil 11 hindurch mit einem Laser bestrahlt. Wenn der Ventilteller 8 aus einem laserabsorbierenden Material hergestellt ist, wird das Material hierdurch erhitzt. Vorzugsweise tritt der Laserstrahl durch den Verschweißbereich 15 hindurch und/oder ist der Laserstrahl auf den Verschweißbereich 15 gerichtet. Durch die Absorption im Ventilteller 8 wird das Material des Ventiltellers 8 erhitzt und somit aufgeschmolzen bzw. plastifiziert. Dies erfolgt insbesondere in unmittelbarer Nähe bzw. an der Kontaktfläche zu dem Verschweißbereich 15. Durch Wärmeleitungsprozesse erfolgt vorzugsweise ebenfalls eine Erhitzung und somit eine Aufschmelzung bzw. Plastifizierung des Verschweißbereichs 15, so dass eine Schweißnaht 26 zwischen dem Ventilteller 8 und dem Befestigungsteil 11 erzeugt wird und der Ventilteller 8 und das Befestigungsteil 11 stoffschlüssig miteinander verbunden werden.

Zum Laserschweißen und/oder Ultraschallschweißen sind der Ventilteller 8 und das Befestigungsteil 11 vorzugsweise jeweils aus einem Kunststoff, insbesondere PET, hergestellt.

Vorzugsweise wird zum Laserschweißen ein Hochleistungsdiodenlaser, vorzugsweise mit einer Wellenlänge von mehr als 900 mm und/oder weniger als 1100 nm, oder ein Festkörperlaser, insbesondere Faserlaser oder Nd:YAG-Laser, vorzugsweise mit einer Wellenlänge von mehr als 1060 nm und/oder weniger als 1090 nm, eingesetzt.

Der Ventilteller wird mit dem Befestigungsteil 11 laserverschweißt oder ultraschallverschweißt und die so bereit gestellte Ventilanordnung 2 wird besonders bevorzugt mit dem Behälter 3 reibverschweißt, wie weiter oben beschrieben.

Es ist auch möglich, dass der Ventilteller 8 kragenlos ausgebildet ist bzw. keinen Kragen 19 für den Rand 3C des Behälters 3 aufweist. Dies ist insbesondere in den Fig. 10 und 12 dargestellt. In diesem Fall schließt der Ventilteller 8 vorzugsweise (axial) bündig mit dem Behälter 3 bzw. dem Rand 3C des Behälters ab.

Zum Verbinden, insbesondere Reibverschweißen, des Behälters 3 mit dem Ventilteller 8 bzw. der (vormontierten) Ventilanordnung 2 wird die der Ventilteller 8 bzw. die Ventilanordnung 2 zunächst in den Behälter 3 eingesetzt.

Das Einsetzen des Ventiltellers 8 kann in einer definieren Lage bzw. Drehlage relativ zu dem Behälter 3 erfolgen.

Beim Verbinden der Ventilanordnung 2 mit dem Behälter 3 wird die Ventilanordnung 2 vorzugsweise mit einem ersten Halter bzw. Werkzeug 27 gehalten und die der Behälter 3 vorzugsweise mit einem zweiten Halter bzw. Werkzeug 28 gehalten. Dies ist schematisch in den Fig. 11 und 12 gezeigt.

Gemäß der in Fig. 11 gezeigten Ausführungsform ist das Kopplungselement 20A als den Behälter 3 bzw. die Öffnung 3A umlaufender Kragen bzw. radial vorstehendes Element ausgebildet. Vorzugsweise weist das Kopplungselement 20A eine oder mehrere, insbesondere einander gegenüberliegende, Eingriffselemente auf, die zum Eingriff mit dem Halter 28 ausgebildet sind. Beim Darstellungsbeispiel sind die Eingriffselemente durch Ausnehmungen gebildet.

Zum Reibverschweißen werden der Behälter 3 und die Ventilanordnung 2 axial aufeinander zubewegt und gleichzeitig zueinander um die Achse L rotiert. Insbesondere wird eines der Teile, vorzugsweise der Behälter 3, in einer festen Position gehalten und das andere Teil, vorzugsweise die Ventilanordnung 2, relativ dazu um die Achse L rotiert.

Der Ventilteller 8 wird vorzugsweise mittels eines Werkzeugs 27 gehalten und/oder gedreht bzw. rotiert, das formschlüssig in den Ventilteller 8 bzw. dessen Kopplungseinrichtung 17 eingreift und/oder den Ventilteller 8 an den Kopplungselementen 17A hält bzw. greift.

Der Ventilteller 8 und der Behälter 3 werden beim Reibverschweißen vorzugsweise axial aufeinander zu bewegt, bis der Ventilteller 8 eine definierte Endlage bzw. axiale Position relativ zu dem Behälter 3 erreicht hat. Vorzugsweise ist der Ventilteller 8 hierzu kragenlos ausgebildet bzw. weist der Ventilteller 8 keinen Kragen 19 auf.

Vorzugsweise schließt der Ventilteller 8 in der Endlage bzw. definierten axialen Position axial bündig mit dem Behälter 3 bzw. dessen Rand 3C ab. Hier sind jedoch auch andere Lösungen möglich.

Ein bündiges Abschließen ermöglicht es, die hergestellte Verbindung zwischen dem Behälter 3 und dem Ventilteller 8 bzw. der Ventilanordnung 2 auf einfache Weise zuverlässig zu prüfen, da der bündige Abschluss bzw. definierte Sitz des Ventiltellers 8 ein Indiz für die korrekte bzw. einwandfreie Verbindung darstellt. Insbesondere ist es ein Indiz für eine fehlerhafte Verbindung bzw. Schweißverbindung, wenn nach dem Herstellen der Verbindung der (kragenlose) Ventilteller 8 nicht axial bündig mit dem Rand 3C des Behälters abschließt.

Alternativ oder zusätzlich erfolgt beim Reibverschweißen des Behälters 3 mit dem Ventilteller 8 eine definierte Zahl von Umdrehungen, beispielsweise genau 12 Umdrehungen. Hierdurch ist ein effizientes, schnelles und reproduzierbares Verbinden bzw. Verschweißen der Ventilanordnung 2 mit dem Behälter 3 sichergestellt.

Beim Reibverschweißen des Behälters 3 mit dem Ventilteller 8 entsteht vorzugsweise eine insbesondere ringartige und/oder radiale Schweißfläche 29. Als Schweißfläche wird insbesondere der Bereich bezeichnet, in dem das Material des Behälters 3 und/oder des Ventiltellers 8 beim Reibverschweißen plastifiziert ist und somit die stoffschlüssige Verbindung bzw. Verschweißung bildet.

Die Breite der Schweißfläche 29 bzw. die Erstreckung der Schweißfläche 29 in radialer Richtung beträgt vorzugsweise mehr als 0,1 mm und/oder weniger als 0,5 mm, insbesondere etwa 0,3 mm. Die Länge der Schweißnaht 29 bzw. die Erstreckung der Schweißnaht 29 in axialer Richtung beträgt vorzugsweise mehr als 0,5 mm, insbesondere mehr als 1 mm, und/oder weniger als 2 mm, insbesondere weniger als 1,5 mm.

Im Betrieb weist die Abgabevorrichtung 1 vorzugsweise einen in den Figuren nicht dargestellten Abgabekopf zur Abgabe des Fluids F auf.

Bei der in den Fig. 10 und 12 dargestellten Ausführungsform ist der Rand 3C vorzugsweise verdickt und kragen- bzw. flanschartig ausgebildet. Der Rand 3C ragt insbesondere radial von dem Halsbereich 3B ab.

Dies ermöglicht es, den Abgabekopf unmittelbar am Rand 3C des Behälters 3 anzuordnen, beispielsweise durch eine Rastverbindung mit dem Rand 3C.

Vorzugsweise ist der Abgabekopf formschlüssig mit dem Rand 3C verbunden bzw. daran befestigt. Alternativ oder zusätzlich kann der Abgabekopf auf dem Rand 3C und/oder dem Ventilteller 8 abgestützt sein, insbesondere wenn der Ventilteller 8 mit dem Rand 3C bündig abschließt.

Gemäß einer weiteren, in den Figuren nicht dargestellten Ausführungsform kann das Kopplungselement 20A entfallen bzw. durch den (verdickten) Rand 3C gebildet sein. In diesem Fall ist es nicht nötig, zusätzlich zu dem Rand 3C ein Kopplungselement 20A vorzusehen. Vorzugsweise weist der Rand 3C dann die Merkmale auf, die vorstehend für das Kopplungselement 20A beschrieben wurden.

### Bezugszeichenliste:

- 1: Abgabevorrichtung
- 2: Ventilanordnung
- 3: Behälter
- 3A: Öffnung
- 3B: Halsbereich
- 3C: Rand
- 4: Ventil
- 5: Ventilgehäuse
- 5A: Schulter
- 5B: Innenraum
- 5C: Kanal
- 6: Ventilelement
- 6A: Kanal
- 7: Rückstellelement
- 8: Ventilteller
- 9: Aufnahme
- 9A: Durchbrechung
- 10: Dichtung
- 11: Befestigungsteil
- 12: Steigleitung
- 13: Kopplungsabschnitt (Befestigungsteil)
- 14: Ausnehmung
- 15: Verschweißbereich
- 16: Aufnahmeraum
- 16A: (Wandungs-)Abschnitt
- 16B: (Wandungs-)Abschnitt
- 17: Kopplungseinrichtung
- 17A: Kopplungselement (Ventilteller)
- 18: Ringraum
- 19: Kragen
- 20: Kopplungsabschnitt (Behälter)
- 20A: Kopplungselement (Behälter)
- 21: Stirnwand
- 22: Durchbrechung
- 23: Anschlag
- 24: erster Abschnitt
- 25: zweiter Abschnitt
- 26: Schweißnaht
- 27: Werkzeug/Halter
- 28: Werkzeug/Halter
- 29: Schweißfläche

- E: Erstreckung
- F: Fluid
- G: Treibgas
- L: Achse

## Patentansprüche

1. Ventilanordnung (2) zur Abgabe eines Fluids (F), wobei die Ventilanordnung (2) einen Ventilteller (8) zur Befestigung der Ventilanordnung (2) an einem Behälter (3), ein Ventilgehäuse (5) und ein Befestigungsteil (11) zur Befestigung des Ventilgehäuses (5) an dem Ventilteller (8) aufweist,
wobei der Ventilteller (8) einen Aufnahmeraum (16) zur Aufnahme des Ventilgehäuses (5) aufweist,
wobei das Befestigungsteil (11) mit dem Ventilteller (8) laserverschweißt oder ultraschallverschweißt ist, und
wobei das Befestigungsteil (11) einen ersten zylindrischen oder konischen Abschnitt (24) aufweist, der in den Aufnahmeraum (16) eingeführt ist, und einen zweiten radial von dem ersten Abschnitt (24) abragenden, kragen- oder flanschartigen Abschnitt (25) aufweist, der an einer Unterseite des Ventiltellers (8) anliegt,
**dadurch gekennzeichnet,**
**dass** das Ventilgehäuse (5) ohne Spiel zwischen dem Ventilteller (8) und dem Befestigungsteil (11) eingeklemmt ist.

2. Ventilanordnung nach Anspruch 1, **dadurch gekennzeichnet, dass** das Befestigungsteil (11) mit dem Ventilteller (8) axial verschweißt ist.

3. Ventilanordnung nach einem der voranstehenden Ansprüche, **dadurch gekennzeichnet, dass** das Befestigungsteil (11), insbesondere der zweite Abschnitt (25), einen Verschweißbereich (15) aufweist.

4. Ventilanordnung nach Anspruch 3, **dadurch gekennzeichnet, dass** der Verschweißbereich (15) vor dem Verschweißen einen dreieckigen oder rechteckigen Querschnitt aufweist.

5. Ventilanordnung nach einem der voranstehenden Ansprüche, **dadurch gekennzeichnet, dass** der Ventilteller (8) aus einem dunklen und/oder laserabsorbierendem Material hergestellt ist und das Befestigungsteil (11) aus einem transparenten, insbesondere lasertransparenten, Material hergestellt ist.

6. Ventilanordnung nach einem der voranstehenden Ansprüche, **dadurch gekennzeichnet, dass** der Ventilteller (8), das Befestigungsteil (11), das Ventilgehäuse (5), ein Ventilelement (6) der Ventilanordnung (2) und/oder ein Rückstellelement (7) der Ventilanordnung (2) aus Kunststoff, insbesondere PET, bestehen.

7. Ventilanordnung nach einem der voranstehenden Ansprüche, **dadurch gekennzeichnet, dass** das Ventilgehäuse (5) mit einem Ventilelement (6), einer Dichtung (10) und optional einem Rückstellelement (7) formschlüssig zu einem Ventil (4) vormontierbar ist.

8. Abgabevorrichtung zur Abgabe eines Fluids (F), wobei die Abgabevorrichtung (1) einen Behälter (3) und eine Ventilanordnung (2) mit einem an dem Behälter (3) befestigten Ventilteller (8) aufweist,
**dadurch gekennzeichnet,**
**dass** die Ventilanordnung (2) nach einem der voranstehenden Ansprüche ausgebildet ist.

9. Abgabevorrichtung nach Anspruch 8, **dadurch gekennzeichnet, dass** der Ventilteller (8) mit dem Behälter (3) radial reibverschweißt ist.

10. Abgabevorrichtung nach Anspruch 8 oder 9, **dadurch gekennzeichnet, dass** der Ventilteller (8) axial bündig mit dem Behälter (3) abschließt und/oder kragenlos ausgebildet ist.

11. Verfahren zur Herstellung einer Ventilanordnung (2) zur Abgabe eines Fluids (F), wobei die Ventilanordnung (2) einen Ventilteller (8) zur Befestigung der Ventilanordnung (2) an einem Behälter (3), ein Ventil (4) mit einem Ventilgehäuse (5) und einem Ventilelement (6), und ein von dem Ventilgehäuse (5) separates Befestigungsteil (11) zur Befestigung des Ventilgehäuses (5) an dem Ventilteller (8) aufweist,
wobei das Befestigungsteil (11) mit dem Ventilteller (8) laserverschweißt oder ultraschallverschweißt wird,
**dadurch gekennzeichnet,**
**dass** erst das Ventil (4) in eine zugeordnete Aufnahme (9) des Ventiltellers (8) eingeführt wird und anschließend das Befestigungsteil (11) in die Aufnahme (9) eingeführt wird, sodass das Ventil (4) zwischen dem Ventilteller (8) und dem Befestigungsteil (11) angeordnet ist und das Befestigungsteil (11) an dem Ventilteller (8) anliegt.

12. Verfahren nach Anspruch 11, **dadurch gekennzeichnet, dass** eine Ventilanordnung (2) nach einem der Ansprüche 1 bis 7 hergestellt wird.

13. Verfahren nach Anspruch 11 oder 12, **dadurch gekennzeichnet, dass** das Ventil (4) von einer Innenseite des Ventiltellers (8) in eine zugeordnete Aufnahme (9) des Ventiltellers (8) eingeführt und das Befestigungsteil (11) auf der Innenseite des Ventiltellers (8) mit dem Ventilteller (8) verschweißt wird.

14. Verfahren nach einem der Ansprüche 11 bis 13, **dadurch gekennzeichnet, dass** der Ventilteller (8) durch das Befestigungsteil (11) hindurch von einem Laserstrahl bestrahlt wird, sodass der Ventilteller (8) und das Befestigungsteil (11) miteinander verschweißt werden.

15. Verfahren nach einem der Ansprüche 11 bis 14, **dadurch gekennzeichnet, dass** das Ventil (4) ohne Spiel zwischen dem Ventilteller (8) und dem Befestigungsteil (11) eingeklemmt wird.

## Claims

1. Valve arrangement (2) for dispensing a fluid (F), the valve arrangement (2) having a valve plate (8) for fixing the valve arrangement (2) to a container (3), a valve housing (5) and a fixing part (11) for fixing the valve housing (5) to the valve plate (8),
wherein the valve plate (8) has a receiving space (16) for receiving the valve housing (5),
wherein the fixing part (11) is laser-welded or ultrasonically welded with the valve plate (8), and
wherein the fixing part (11) has a first cylindrical or conical portion (24) which is inserted into the receiving space (16), and has a second collar- or flange-like portion (25) which projects radially from the first portion (24) and lies against an underside of the valve plate (8),
**characterized**
**in that** the valve housing (5) is clamped between the valve plate (8) and the fixing part (11) without play.

2. Valve arrangement according to claim 1, **characterized in that** the fixing part (11) is axially welded with the valve plate (8).

3. Valve arrangement according to one of the preceding claims, **characterized in that** the fixing part (11), in particular the second portion (25), has a welding region (15).

4. Valve arrangement according to claim 3, **characterized in that** the welding region (15) has a triangular or rectangular cross-section before the welding.

5. Valve arrangement according to one of the preceding claims, **characterized in that** the valve plate (8) is made of a dark and/or laser-absorbing material and the fixing part (11) is made of a transparent, in particular laser-transparent, material.

6. Valve arrangement according to one of the preceding claims, **characterized in that** the valve plate (8), the fixing part (11), the valve housing (5), a valve element (6) of the valve arrangement (2) and/or a reset element (7) of the valve arrangement (2) consist of plastic, in particular PET.

7. Valve arrangement according to one of the preceding claims, **characterized in that** the valve housing (5) can be pre-assembled with a valve element (6), a seal (10) and optionally a reset element (7) in a form-fitting manner to form a valve (4).

8. Dispensing apparatus for dispensing a fluid (F), the dispensing apparatus (1) having a container (3) and a valve arrangement (2) with a valve plate (8) fixed to the container (3),
**characterized,**
**in that** the valve arrangement (2) is designed according to one of the preceding claims.

9. Dispensing apparatus according to claim 8, **characterized in that** the valve plate (8) is radially friction-welded with the container (3).

10. Dispensing apparatus according to claim 8 or 9, **characterized in that** the valve plate (8) is axially flush with the container (3) and/or is designed collarless.

11. Method for producing a valve arrangement (2) for dispensing a fluid (F), the valve arrangement (2) having a valve plate (8) for fixing the valve arrangement (2) to a container (3), a valve (4) with a valve housing (5) and a valve element (6), and a fixing part (11) separate from the valve housing (5) for fixing the valve housing (5) to the valve plate (8),
wherein the fixing part (11) is laser-welded or ultrasonically welded with the valve plate (8),
**characterized,**
**in that** first the valve (4) is inserted into an associated receptacle (9) of the valve plate (8) and then the fixing part (11) is inserted into the receptacle (9) so that the valve (4) is arranged between the valve plate (8) and the fixing part (11) and the fixing part (11) lies against the valve plate (8).

12. Method according to claim 11, **characterized in that** a valve arrangement (2) according to one of claims 1 to 7 is produced.

13. Method according to claim 11 or 12, **characterized in that** the valve (4) is inserted from an inner side of the valve plate (8) into an associated receptacle (9) of the valve plate (8) and the fixing part (11) is welded with the valve plate (8) on the inner side of the valve plate (8).

14. Method according to one of claims 11 to 13, **characterized in that** the valve plate (8) is irradiated by a laser beam through the fixing part (11) so that the valve plate (8) and the fixing part (11) are welded together.

15. Method according to one of claims 11 to 14, **characterized in that** the valve (4) is clamped between the valve plate (8) and the fixing part (11) without play.

## Revendications

1. Agencement de soupape (2) pour distribuer un fluide (F), l'agencement de soupape (2) présentant un disque de soupape (8) pour fixer l'agencement de soupape (2) à un récipient (3), un boîtier de soupape (5) et une partie de fixation (11) pour fixer le boîtier de soupape (5) au disque de soupape (8),
le disque de soupape (8) présentant un espace de réception (16) pour recevoir le boîtier de soupape (5),
la partie de fixation (11) étant soudée au laser ou soudée par ultrasons au disque de soupape (8), et
la partie de fixation (11) présentant une première section cylindrique ou conique (24) qui est introduite dans l'espace de réception (16) et une deuxième section (25) de type collerette ou bride qui dépasse radialement de la première section (24), qui s'applique contre un côté inférieur du disque de soupape (8),
**caractérisé**
**en ce que** le boîtier de soupape (5) est serré sans jeu entre le disque de soupape (8) et la partie de fixation (11).

2. Agencement de soupape selon la revendication 1, **caractérisé en ce que** la partie de fixation (11) est soudée axialement au disque de soupape (8).

3. Agencement de soupape selon l'une quelconque des revendications précédentes, **caractérisé en ce que** la partie de fixation (11), en particulier la deuxième section (25), présente une zone de soudage (15).

4. Agencement de soupape selon la revendication 3, **caractérisé en ce que** la zone de soudage (15) présente une section transversale triangulaire ou rectangulaire avant le soudage.

5. Agencement de soupape selon l'une quelconque des revendications précédentes, **caractérisé en ce que** le disque de soupape (8) est fabriqué dans un matériau sombre et/ou absorbant le laser et la partie de fixation (11) est fabriquée dans un matériau transparent, en particulier transparent au laser.

6. Agencement de soupape selon l'une quelconque des revendications précédentes, **caractérisé en ce que** le disque de soupape (8), la partie de fixation (11), le boîtier de soupape (5), un élément de soupape (6) de l'agencement de soupape (2) et/ou un élément de rappel (7) de l'agencement de soupape (2) sont constitués de matière plastique, en particulier de PET.

7. Agencement de soupape selon l'une quelconque des revendications précédentes, **caractérisé en ce que** le boîtier de soupape (5) avec un élément de soupape (6), un joint d'étanchéité (10) et éventuellement un élément de rappel (7) peut être prémonté par complémentarité de forme en une soupape (4).

8. Dispositif de distribution pour distribuer un fluide (F), le dispositif de distribution (1) présentant un récipient (3) et un agencement de soupape (2) avec un disque de soupape (8) fixé au récipient (3),
**caractérisé**
**en ce que** l'agencement de soupape (2) est réalisé selon l'une quelconque des revendications précédentes.

9. Dispositif de distribution selon la revendication 8, **caractérisé en ce que** le disque de soupape (8) est soudé par friction radialement au récipient (3).

10. Dispositif de distribution selon la revendication 8 ou 9, **caractérisé en ce que** le disque de soupape (8) affleure axialement avec le récipient (3) et/ou est réalisé sans collerette.

11. Procédé de fabrication d'un agencement de soupape (2) pour la distribution d'un fluide (F), l'agencement de soupape (2) présentant un disque de soupape (8) pour la fixation de l'agencement de soupape (2) sur un récipient (3), une soupape (4) avec un boîtier de soupape (5) et un élément de soupape (6), et une partie de fixation (11) séparée du boîtier de soupape (5) pour la fixation du boîtier de soupape (5) sur le disque de soupape (8),
la partie de fixation (11) étant soudée au laser ou soudée par ultrasons au disque de soupape (8),
**caractérisé**
**en ce que** la soupape (4) est d'abord introduite dans un logement (9) associé du disque de soupape (8) et la partie de fixation (11) est ensuite introduite dans le logement (9), de telle sorte que la soupape (4) est agencée entre le disque de soupape (8) et la partie de fixation (11) et la partie de fixation (11) s'applique contre le disque de soupape (8).

12. Procédé selon la revendication 11, **caractérisé en ce qu'**un agencement de soupape (2) selon l'une quelconque des revendications 1 à 7 est fabriqué.

13. Procédé selon la revendication 11 ou 12, **caractérisé en ce que** la soupape (4) est introduite par un côté intérieur du disque de soupape (8) dans un logement (9) associé du disque de soupape (8) et la partie de fixation (11) est soudée au disque de soupape (8) sur le côté intérieur du disque de soupape (8).

14. Procédé selon l'une quelconque des revendications 11 à 13, **caractérisé en ce que** le disque de soupape (8) est exposé à un faisceau laser à travers la partie de fixation (11), de telle sorte que le disque de soupape (8) et la partie de fixation (11) sont soudés l'un à l'autre.

15. Procédé selon l'une quelconque des revendications 11 à 14, **caractérisé en ce que** la soupape (4) est serrée sans jeu entre le disque de soupape (8) et la partie de fixation (11).
